Europäisches Patentamt

European Patent Office

Office européen des brevets

(19)

(11) Publication number: **0 248 946 B1**

# EUROPEAN PATENT SPECIFICATION

(45) Date of publication of patent specification: **12.06.91**    (51) Int. Cl.⁵: **H02K 1/14**

(21) Application number: **86116696.5**

(22) Date of filing: **02.12.86**

(54) Cored armature for an inner rotor motor.

(30) Priority: **13.06.86 JP 139079/86**
     **25.07.86 JP 176336/86**

(43) Date of publication of application:
     **16.12.87 Bulletin 87/51**

(45) Publication of the grant of the patent:
     **12.06.91 Bulletin 91/24**

(84) Designated Contracting States:
     **CH DE FR GB LI**

(56) References cited:
     **DE-A- 217 555**
     **US-A- 2 607 816**
     **US-A- 2 981 856**

     **PATENT ABSTRACTS OF JAPAN, vol. 7, no.
     226 (E-202)[1371], 7th October 1983; & JP - A
     - 58 116 058 (FUJI DENKI SEIZO K.K.)
     11-07-1983**

     **PATENT ABSTRACTS OF JAPAN, vol. 4, no.
     48 (E-6)[530]; & JP - A - 55 172 247
     (MATSUSHITA DENKI SANGYO K.K.)
     06-02-1980**

(73) Proprietor: **Shicoh Engineering Co., Ltd.**
     **9-4, Chuorinkan 4-chome**
     **Yamato, Kanagawa 242(JP)**

(72) Inventor: **Shiraki, Manabu**
     **4451-182, Shimotsuruma**
     **Yamato Kanagawa 242(JP)**

(74) Representative: **Klingseisen, Franz, Dipl.-Ing.
     et al
     Patentanwälte Dr. F. Zumstein Dr. E. Ass-
     mann Dipl.-Ing. F. Klingseisen Bräuhaus-
     strasse 4
     W-8000 München 2(DE)**

## Description

This invention relates to a cored armature for a stepping motor or a DC brushless motor (or AC servomotor) of the inner rotor type according to the preamble of claim 1 as known from US-A-2607816 or AT-A-217555.

Cored motors are advantageous in that a higher torque can be obtained but have a drawback that a higher cogging is produced compared with coreless motors.

Such motors which produce a high cogging cannot attain smooth servoing and additionally involve various disadvantages.

Accordingly, conventional cored motors employ various burdensome methods to eliminate the problem. For example, stator poles (or a core) on which coils are wound are formed in a skew, or in DC brushless motors, magnetic poles of a field magnet are magnetized in a skew, and a complicated and expensive controlling circuit is employed to cope with such a special means by an electric circuit means. Such methods, however, do not sufficiently eliminate or reduce a cogging in cored motors nor readily allow mass-production of cored motors at a low cost.

Such drawbacks as described above are involved in cored motors whether they are of the outer rotor type or of the inner rotor type.

Such cored motors include any motor which has a stator pole on which an armature coil is wound, such as, for example, DC brushless motors (AC servomotors) and stepping motors.

Such cored motors include the outer rotor type and the inner rotor type as described above. However, in order to obtain a servomotor having a low inertia and a high responsiveness, motors of the inner rotor type are more preferable than those of the outer rotor type.

In an armature of a cored motor of the inner rotor type, it is necessary to form on an inner periphery of an annular or cylindrical stator yoke a plurality of radially inwardly extending stator poles on which armature coils are wound in slots between the stator poles.

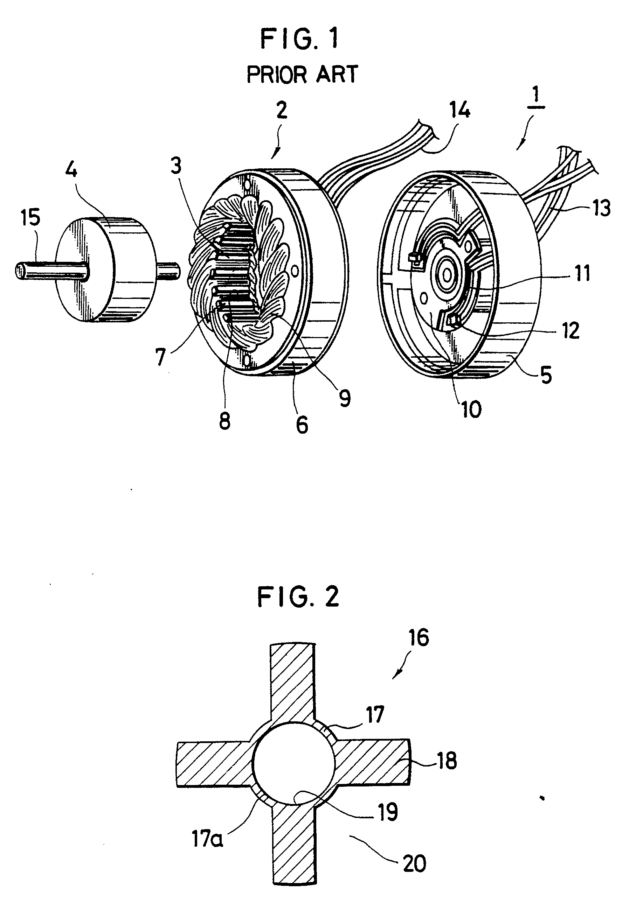

A typical one of conventional cored motors of the inner rotor type having such a construction as described above is shown as an example in FIG. 1.

The motor shown is a DC brushless motor of the inner rotor type and is generally denoted at 1. The DC brushless motor 1 includes a stator armature 2 having an annular configuration, and a magnet rotor 4 secured to a rotary shaft 15 and supported for rotation within an inner spacing 3 of the stator armature 2. The stator armature 2 is secured to an inner face of a cup-shaped motor casing 5 constituting a stator. The stator armature 2 includes an annular stator yoke 6 having a large number of radially inwardly extending T-shaped stator poles 7 formed on and along an inner circumferential periphery thereof with coil receiving slots 8 defined between the stator poles 7.

The slots 8 are narrow at entrances thereof and are widened inwardly in order to allow generation of a higher torque by and smooth rotation of the rotor (magnet rotor 4) of the motor 1. Armature coils 9 having terminals 14 are wound in the slots 8 and each extend over two or more of the stator poles 7. Accordingly, in the DC brushless motor 1 of FIG. 1, adjacent ones of the armature coils 9 overlap each other in a radial direction and also in a circumferential direction.

In order to assure more smooth rotation of the DC brushless motor 1, the armature coils 9 may sometimes be wound such that two or more of them are received in an overlapping relationship in each of the slots 8.

A printed circuit board 10 is securely mounted on an inner bottom face of the motor casing 5. The printed circuit board 10 has a printed wiring pattern 11 formed thereon by etching or a like technique. A position detecting element 12 such as a Hall effect element or a Hall IC (integrated circuit) is located on the printed circuit board 10 and is soldered to the printed wiring pattern 11 to establish electric connection therebetween. Lead wires 13 are also soldered to the printed wiring pattern 11 on the printed circuit board 10 to establish electric connection therebetween.

In this manner, in the conventional DC brushless motor 1 of the inner rotor type, the stator yoke (armature core) 6 of the stator armature 2 has a plurality of radially inwardly extending stator poles 7 formed thereon with the coil receiving slots 8 defined between the stator poles 7 and the armature coils 9 are wound in an overlapping relationship in the slots 8.

The cored DC brushless motor 1 of the slot type has a drawback that a high cogging is generated, as described above, due to the presence of the stator poles 7. Moreover, the cored DC brushless motor 1 of the inner rotor type as shown in FIG. 1 has a drawback that it is very troublesome to wind the armature coils 9 which must be wound into the slots 8 from radially inside of the stator yoke 6 and hence the mass-productivity of such motors is low. In addition, where the cored DC brushless motor 1 of the inner rotor type has a smaller diametrical dimension or a greater axial length, it is disadvantageous in that winding of the armature coils 9 into the slots 8 will be more troublesome and the mass-productivity of such motors will be lower accordingly.

Therefore, where a DC brushless motor of the cored type is allowed to have a high inertia, it may be formed as a cored DC brushless motor of the outer rotor type wherein coil receiving slots are formed by forming a plurality of radially outwardly extending stator poles on an annular stator yoke.

However, in order to obtain a cored DC brushless motor which can generate a high torque and is low in inertia and high in responsiveness, it cannot be avoided to employ a cored DC brushless motor of the inner rotor type while winding of coils therein is troublesome and its mass-productivity is low.

In short, in a cored armature of a conventional inner rotor motor, a rotor (for example, a magnet rotor) is opposed to coil receiving slots with a radial air gap left therebetween, and thus an influence of an attracting force between them appears clearly as the former rotates relative to the latter. This is a cogging which is a serious problem when a motor is to rotate at a low speed.

In order to resolve this problem, a method is conventionally employed wherein either coil receiving slots or magnetic poles of a magnet rotor are formed in a skew so as to moderate an attracting force between them.

However, this method is disadvantageous in that much time is required for working and assembly. Besides, since a cogging force depends upon the angle of the skew, cogging cannot be removed completely and reduction of generation of torque may be resulted.

Further, in an inner rotor motor of the type wherein slots are formed on an inner circumferential periphery of a stator yoke, it is troublesome to wind coils into slots, and hence the mass-productivity is low.

In addition, a conventional motor of the slop type requires an insulating countermeasure and an armature coil holder or winding frame (bobbin) and hence has a drawback that it cannot be produced in a mass at a low cost.

It is an object of the present invention to provide a cored armature for an inner rotor motor wherein little cogging appears and armature coils can be wound very readily into coil receiving slots and which can be readily produced in a mass at a low cost.

This object is achieved by the features in the characterizing part of claim 1.

The cored armature according to present invention exhibits following advantages: (1) a high cogging which is called in question when the motor is rotating at a low speed will not appear because the cored stator has no slot on an inner periphery thereof opposing to the rotor, for example, a magnet rotor, due to the presence of the cylindrical magnetic body of the armature core. Thus, since the cored armature is, in other words, of the slotless structure, inner rotor motors presenting a good performance can be obtained: (2) since the coil receiving slots of the armature core presents an outwardly opened configuration during formation of the cored armature, the armature coils can be wound readily in the coil receiving slots, and hence such cored armatures can be produced readily in a mass at a low cost; (3) since the inner bore of the inner cylindrical magnetic body of the armature core can be machined circumferentially, for example, ground, the dimension of the radial air gap between a rotor and the cored armature (stator armature) can be minimized, and hence a higher torque can be obtained; (4) owing to the presence of the cylindrical magnetic member secured to the outer periphery of the armature core, the necessity of an armature coil holding member of a wedge-shaped structure which is used conventionally for holding an armature coil wound and received in a coil receiving slot where a motor casing itself surrounds an armature core can be eliminated, and the contour of the stator poles of the armature core can be simplified and hence working of the stator poles can become easier. Accordingly, cored armatures for inner rotor motors can be produced readily in a mass at a low cost; (5) where the armature core is formed in an integral relationship from a mixture of a magnetic substance and a resin material, for example, an iron powder contained resin material, by molding, the hysteresis loss and the eddy-current loss of the cored armature can be low and the cored armature can be coggingless as described above. Accordingly, cored armatures for inner rotor motors of a high performance can be obtained; (6) where the armature core is formed from an iron powder contained resin material as described above, the inner cylindrical magnetic body can be machined very easily, and hence the effect listed at (3) above can be improved further; (7) by forming the stator poles of the armature core to extend in radial directions while the outer cylindrical member on the outer periphery of the armature core is formed to extend in a circumferential direction, a magnetic circuit construction which allows a magnetic flux to desirably pass therethrough can be attained, and hence a high torque can be obtained from the cored armature; (8) since magnetic powder or magnetic powder contained resin material is enclosed and solidified in the coil receiving slots of the cored armature, the necessity of a winding frame (bobbin) for suppressing vibrations of the armature coils can be eliminated, and hence the cored armature can be produced in a mass at a low cost; (9) by enclosing magnetic powder or magnetic powder contained resin material in the coil receiving slots, spacings in the slots can be eliminated, and hence magnetic saturation can be eliminated. Accordingly, cored armatures of a desirable magnetic circuit construction can be obtained; (10) where magnetic powder contained resin material or resin is enclosed in the coil receiving slots, a winding frame can be eliminated as described above, and besides electric insulation can be attained thereby; and (11) due to such effects as listed (1) to (10) above, inner rotor motors having a cored armature can be produced readily with high accuracy in a mass at a low cost.

The above and other objects, features and advantages of the present invention will become apparent from the following description and the appended claimed, taken in conjunction with the accompanying drawings.

## BRIEF DESCRIPTION OF THE DRAWINGS

FIG. 1 is a fragmentary perspective view of a DC brushless motor of the inner rotor type having a conventional cored armature;

FIG. 2 is a schematic illustration of an armature core used in a cored armature according to the present invention;

FIG. 3 is a schematic illustration showing armature coils wound on stator poles of the armature core of FIG. 2;

FIG. 4 is a schematic illustration of the armature core of fig 3 fitted with a cylindrical magnetic member;

FIG. 5 is a similar view but showing the armature core of FIG. 4 at a next step of production; and

FIG. 6 is a similar view but showing the cored armature wherein resin material or resin material with iron powder mixed therein is filled in coil receiving slots of the cored armature according to the present invention.

## DESCRIPTION OF THE PREFERRED EMBODIMENT

Now, a preferred embodiment of the present invention will be described in detail with reference to FIGS. 2 to 6 which show different steps of production of a cored armature for an inner rotor motor according to the present invention.

Referring first to FIG. 2, an armature core 16 is first formed integrally from a magnetic material.

The armature core 16 has an inner cylindrical magnetic body 17 and a plurality of, 4 in FIG. 2, stator poles 18 made of a magnetic material and formed in an integral relationship with and extending radially outwardly from the cylindrical magnetic body 17. The inner cylindrical magnetic body 17 of the armature core 16 has a center bore 19 formed therein for locating a rotor for rotation therein, thereby constituting an inner rotor motor. Meanwhile, the radial stator poles 18 of the armature core 16 define therebetween coil receiving slots 20 in which armature coils described hereinbelow are accommodated.

The armature core 16 is a coggingless armature core as described below because the inner cylindrical magnetic body 17 is integral with the stator poles 18. However, in order to improve its performance, the magnetic short-circuiting between adjacent stator poles 18 by the cylindrical magnetic body must be minimized or reduced to an optimum degree. To this end, the radial thickness of the cylindrical magnetic body 17 must necessarily be minimized. Accordingly, portions of the cylindrical magnetic body 17 have a minimised radial thickness of 1 mm or less. It is to be noted that the minimised thickness of 1 mm is an allowable maximum value and is considered too great, but in such a case, it can be worked or machined until an optimum radial thickness is reached. Further, since portions of the magnetic cylinder 17 at which the radial thickness thereof should be minimized are located between the stator poles on which main armature coils are wound, the radial thickness of the magnetic cylinder 17 may be be greater than 1 mm at portions not wound by the main armature coils. even though it is desirable for the magnetic cylinder 17 to have a radial thickness less than 1 mm.

Further, it is desirable for the armature core 16, particularly the stator poles 18 thereof, to extend in radial directions in order that magnetic paths may pass in desired directions. In such a case, portions 17a of the magnetic cylinder 17 of the armature core 16 other than those portions from which the stator poles 18 extend need not be directed in radial directions but may be directed in radial directions because those portions are very small in thickness.

The armature core 16 can conveniently be produced using (1) a method wherein the stator poles 18 are formed integrally with the armature core 16 in radial directions from a magnetic material by suitable means such as centrifugal casting or (2) another method wherein the stator poles 18 are formed integrally with the armature core 16 from a mixture at least of a magnetic material and a resin material such as, for example, a resin material with iron powder mixed therein, using a plastics molding means. According to a method of forming an armature core without using a stack of steel plates, working of the magnetic cylinder is very easy, and particularly the inner bore of the magnetic cylinder can be very easily machined circumferentially by such means as polishing. As a result, the dimension of the radial air gap between a rotor and the cylindrical magnetic body can be minimized. Accordingly, a cored motor of the inner rotor type can be produced which provides a high torque even upon rotation at a low speed.

Further, where the armature core 16 is integrally formed by molding from a mixture of a magnetic material and a resin material, for example, a resin material with iron powder mixed therein, it becomes coggingless because the hysteresis loss and the eddy-current loss are low and because of the presence of the magnetic cylinder 17. Accordingly, a cored armature for an inner rotor motor which exhibits a good performance can be obtained.

As apparently seen from FIG. 2, an armature core according to the present invention has a plurality of radially outwardly opened coil receiving slots formed therein. Accordingly, armature coils can be readily accommodated or wound in the slots.

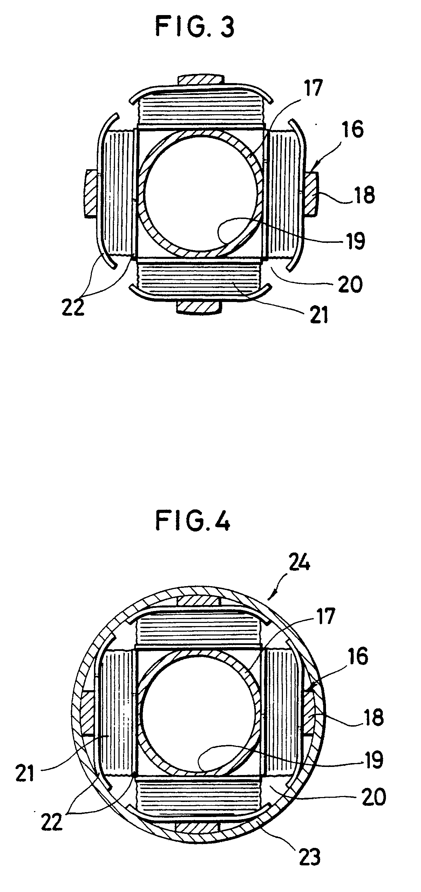

After formation of the radially outwardly opened armature core 16 as shown in FIG. 2, an armature coil 21 which is wound on an outer periphery of a cylindrical winding frame 22 made of a non-magnetic substance is fitted radially inwardly onto each of the stator poles 18 from outside as shown in FIG. 3, making use of the radially outwardly opened slots 20 of the armature core 16.

It will be appreciated that the winding frames 22 are used in order to prevent short-circuiting between the armature coils 21 and the armature coils 16, that is, in order to establish electric insulation from each other. However, where the armature core 16 has been processed for insulation, the winding frames 22 can be omitted. In such a case, the armature coils 21 may be wound on and secured to the stator poles 18 either by winding armature coils into cylinders and fitting and securing the armature coils radially inwardly onto the stator poles from outside, or by winding a conductor directly around the stator poles using a suitable winder.

After the armature coils 21 have been wound on the stator poles 18 as shown in FIG. 3, a cylindrical magnetic member 23 is secured to outer peripheries of the stator poles 18 by suitable means as shown in FIG. 4 in order to prevent the armature coils 21 from being pulled off the stator poles and to close magnetic circuits of the stator coils 21.

The cylindrical magnetic member 23 may be formed as a motor casing, and in such a case, holders for the armature coils such as, for example, winding frames, can be omitted. It is to be noted that where the cylindrical magnetic member 23 serves also as a motor casing, the inner periphery thereof is preferably processed for insulation.

Further, in order to obtain a magnetic circuit construction which allows magnetic fluxes to pass therethrough in a desired manner, preferably the cylindrical magnetic member 23 is formed to extend in a circumferential direction.

Thus, a cored armature 24 as shown in FIG. 4 can be formed by securing the cylindrical magnetic member 23 to the outer periphery of the armature core 16 having the armature coils 21 of FIG. 3 wound thereon.

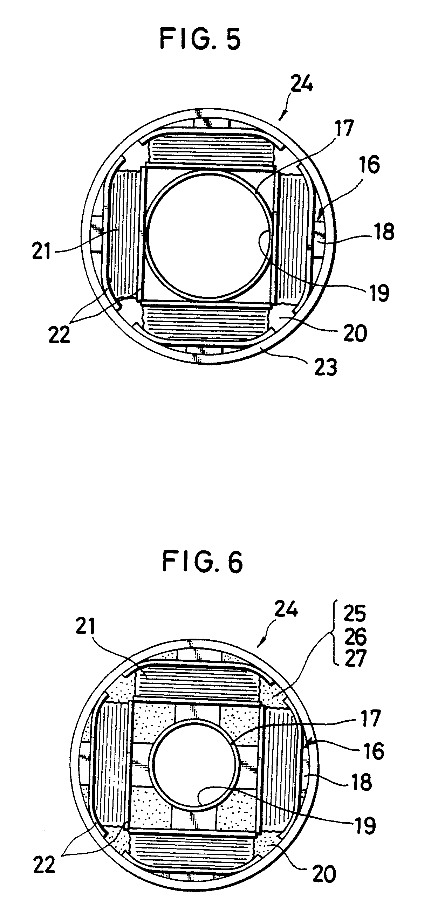

By the way, where the cylindrical magnetic body 17 has a great radial thickness, it will cause magnetic short-circuiting between the stator poles 18. Accordingly, in such a case, it is preferable to machine the inner bore 19 to reduce the radial thickness of the cylindrical magnetic member 17 as seen in FIG. 5.

Either resin material 25 or iron-powder containing resin material 26 is molded or magnetic powder 27 is enclosed in the slots 20 of the armature core 16 on which the armature coils 21 are carried as shown in FIG. 3 or in the slots 20 of the cored armature 24 of FIG. 4 in order to firmly carry the armature coils 21 on the stator poles 18. Particularly where such iron-powder containing resin material 26 is molded in the slots 20 or where magnetic power 27 is enclosed in the slots 20, magnetic paths can be closed reasonably.

Meanwhile, where the armature core 16 is formed integrally from a magnetic powder containing resin, if suitable means such as a two color molding method is used, an insulating countermeasure can be applied to inner faces of the coil receiving slots 20 by forming a portion of a face of the armature core 16 on which the armature coils 21 are wound, for example, an outer peripheral portion of the magnetic cylinder 17 and surface portions of the stator poles 18, from a resin material. It is to be noted that where the armature core 16 is not formed from a magnetic powder containing resin material, it is necessary to process the armature core 16 for insulation, for example, by applying a non-conductive paint to portions of the armature core 16 which are to contact with the armature coils. This will eliminate the necessity of winding frames as described above.

In enclosing the resin material 25 or the iron powder containing resin material 26 in the slots 20, molten resin material 25 or 26 may be poured into the slots 20 and then left as it is until it becomes solidified. Where the resin material 25, 26 is enclosed in the slots 20 by molding or the like, there is a merit that the necessity of processing for insulation to an inner circumferential face of the cylindrical magnetic member 23 can be eliminated. Also, processing for insulation to faces of the slots 20 to avoid contact with the armature coils 21 can be eliminated. Further, where the magnetic powder containing resin material 26 is poured into the slots 20, there is a merit that also the cylindrical magnetic member 23 can be simultaneously molded in an integral relationship, and hence armature cores can be advantageously produced in a mass at a low cost. In addition, where the magnetic powder containing resin material 26 or the magnetic powder 27 is enclosed in the slots 20, vibrations of the armature coils 21 can be prevented, and besides a desirable magnetic circuit which can prevent magnetic saturation and can reasonably close a magnetic path can be constructed because an air gap within the slots 20 can be eliminated. It is to be noted that where the magnetic powder 27 is enclosed in the slots 20, it is desirable to put the magnetic powder 27 into the slots 20 from ones of opposite axial open ends of the slots 20 with the other axial open ends held closed by a suitable means and then to close the one axial open ends of the slots 20 by a suitable means.

Having now fully described the invention, it will be apparent to one of ordinary skill in the art that many changes and modifications can be made thereto without departing from the scope of the invention as claimed.

## Claims

1. A cored armature for an inner rotor motor, comprising an armature core (16) including a cylindrical body (17) made of a magnetic substance and a plurality of radially outwardly extending stator poles (18) formed integrally with the outer circumferential periphery of said cylindrical body with coil receiving slots (20) defined therebetween, a plurality of armature coils (21) wound in said coil receiving slots and around said stator poles (18) of said armature core, and a cylindrical magnetic member (23) having an inner bore substantially coincident with the outer periphery of said armature core (16) and secured to the outer periphery of said armature core,
characterized in that said cylindrical body (17) and said coil receiving stator poles (18) integrally formed with the outer periphery of said cylindrical body are formed as a unitary body from a magnetic material by a centrifugal or like casting means, or that they are formed in an integral relationship by molding a mixture comprising at least a magnetic material and a resin material, and that magnetic powder (27) or magnetic powder containing resin material (26), or resin material (25) encloses the coils in said slots (20) of the armature core (16).

2. A cored armature for an inner rotor motor according to claim 1, wherein said armature coils (21) are each wound over one or more of said stator poles (18).

3. A cored armature for an inner rotor motor according to claim 1, wherein said cylindrical body (17) having said stator poles (18) on the outer periphery thereof has portions with a radial thickness of 1 mm or less.

4. A cored armature for an inner rotor motor according to claim 3, wherein said cylindrical body (17) having said stator poles (18) on the outer periphery thereof is formed to have said portions with a radial thickness of 1 mm or less by machining an inner bore (19) thereof.

## Revendications

1. Stator à noyau pour moteur à rotor interne, comprenant un noyau de stator (16) comportant un corps cylindrique (17) réalisé en une substance magnétique et plusieurs pôles de stator (18) s'étendant radialement vers l'extérieur et formés d'un seul tenant sur la périphérie circonférentielle externe dudit corps cylindrique avec des fentes de réception d'enroulement (20) définies entre eux, plusieurs enroulements de stator (21) enroulés dans lesdites fentes de réception d'enroulement définies par lesdits pôles de stator (18) dudit noyau de stator, un organe magnétique cylindrique (23) comprenant un alésage interne coïncidant sensiblement avec la périphérie externe dudit noyau de stator (16) et fixé sur la périphérie externe dudit noyau de stator,
caractérisé en ce que ledit corps cylindrique (17) et lesdits pôles de stator (18) de réception d'enroulement formés d'un seul tenant sur la périphérie externe dudit corps cylindrique sont formés en un matériau magnétique de manière à s'étendre dans des directions radiales par un moyen à coulée centrifuge ou analogue, ou en ce que ledit noyau de stator est formé d'un seul tenant à partir d'un mélange d'au moins un matériau magnétique et d'une résine, et en ce que la poudre magnétique (27) ou la résine (26) contenant de la poudre magnétique, ou encore la résine (25), est enfermée dans lesdites fentes (20) du noyau de stator (16).

2. Stator à noyau pour moteur à rotor interne selon la revendication 1, caractérisé en ce que lesdits enroulements de stator (21) sont chacun enroulés sur un ou plusieurs desdits pôles de stator (18).

3. Stator à noyau pour moteur à rotor interne selon la revendication 1, caractérisé en ce que ledit corps cylindrique (17) qui comporte lesdits pôles de stator (18) sur sa périphérie externe a une épaisseur radiale de 1 mm ou moins.

4. Stator à noyau pour moteur à rotor interne selon la revendication 3, caractérisé en ce que ledit corps cylindrique (17) qui comporte lesdits pôles de stator (18) sur sa périphérie externe est formé de manière que son épaisseur radiale soit de 1 mm ou moins par usinage d'un alésage interne (19).

**Ansprüche**

1. Anker mit Kern für einen Innenläufermotor, der einen Ankerkern (16) mit einem zylindrischen Körper (17) aus einem magnetischen Material und mit mehreren radial nach außen verlaufenden Statorpolen (18), die in einem Stück mit der äußeren Umfangsfläche des zylindrischen Körpers ausgebildet sind, wobei dazwischen Wicklungsaufnahmeschlitze (20) begrenzt sind, mehrere Ankerwicklungen (21), die in die Wicklungsaufnahmeschlitze und um die Statorpole (18) des Ankerkerns gewickelt sind, und ein zylindrisches magnetisches Element (23) mit einer inneren Bohrung umfaßt, die im wesentlichen mit dem Außenumfang des Ankerkerns (16) übereinstimmt und am Außenumfang des Ankerkerns befestigt ist, **dadurch gekennzeichnet,** daß der zylindrische Körper (17) und die die Wicklungen aufnehmenden Statorpole (18) in einem Stück mit dem Außenumfang des zylindrischen Körpers als einteiliger Körper aus einem magnetischen Material durch Zentrifugalguß oder ein ähnliches Gießverfahren hergestellt sind, oder daß sie in einem Stück durch Formen aus einem Gemisch gebildet sind, das wenigstens ein magnetisches Material und ein Harzmaterial umfaßt, und daß magnetisches Pulver (27) oder ein magnetisches Pulver enthaltendes Harzmaterial (26) oder ein Harzmaterial (25) die Wicklungen in den Schlitzen (20) des Ankerkerns (16) umschließt.

2. Anker mit Kern für einen Innenläufermotor nach Anspruch 1, bei dem die Ankerwicklungen (21) jeweils über einen oder mehrere der Statorpole (18) gewickelt sind.

3. Anker mit Kern für einen Innenläufermotor nach Anspruch 1, bei dem der zylindrische Körper (17) mit den Statorpolen (18) an seinem Außenumfang Teile mit einer radialen Stärke von 1 mm oder weniger aufweist.

4. Anker mit Kern für einen Innenläufermotor nach Anspruch 3, bei dem der zylindrische Körper (17) mit den Statorpolen (18) an seinem Außenumfang so ausgebildet ist, daß er Teile mit einer radialen Stärke von 1 mm oder weniger aufweist, indem seine Innenbohrung (19) maschinell bearbeitet ist.

EP 0 248 946 B1

# FIG. 1
## PRIOR ART

# FIG. 2

**FIG. 3**

**FIG.4**

## FIG. 5

## FIG. 6